# EUROPÄISCHE PATENTSCHRIFT

(11) **EP 2 218 659 B1**
(45) Veröffentlichungstag und Bekanntmachung des Hinweises auf die Patenterteilung: **19.12.2012**
(21) Anmeldenummer: 10151093.1
(22) Anmeldetag: 19.01.2010
(51) Int. Cl.: B65G 13/02, B65G 17/00, B65G 47/26, B65G 13/10, B65G 47/54

(54) **Fördersystem**
Conveying system
Système d'alimentation

(30) Priorität: 12.02.2009 DE 102009008711
(43) Veröffentlichungstag der Anmeldung: 18.08.2010
(73) Patentinhaber: Ceratis GmbH, 56307 Dernbach (DE)
(72) Erfinder: Krups, Peter, 56584 Anhausen (DE); Krups, Matthias, 53639 Königswinter-Vinxel (DE)
(74) Vertreter: von Kreisler Selting Werner

(56) Entgegenhaltungen:
- EP-A1- 1 671 901
- WO-A1-2009/027461
- DE-A1- 3 916 334
- DE-A1- 19 539 844
- GB-A- 1 215 011
- US-A- 2 759 585
- US-A- 5 222 587

## Beschreibung

Die Erfindung betrifft ein Fördersystem gemäß dem Oberbegriff des Anspruchs 1, insbesondere ein Friktionsfördersystem, das eine Fördereinrichtung, wie einen Rollen-, einen Gurt- oder einen Plattenförderer aufweist, wobei auf die Fördereinrichtung Werkstückträger lose aufgelegt werden. Insbesondere betrifft die Erfindung einen Rollenförderer, bei dem das Bewegen der Werkstückträger mittels Friktion erfolgt.

Mit Hilfe von Fördereinrichtungen werden insbesondere in der Serienfertigung Werkstücke zwischen einzelnen Arbeitsplätzen, an denen beispielsweise eine Montage oder Bearbeitung der Werkstücke erfolgt, transportiert. Hierzu werden die Werkstücke auf Werkstückträgern angeordnet, die zusammen mit den Werkstücken durch entsprechende Fördereinrichtungen bewegt werden. Zum Bewegen der Werkstückträger sind Friktionsförderer bekannt. Bei Friktionsförderern werden die Werkstückträger nicht fest mit Fördereinrichtungen verbunden, sondern liegen beispielsweise auf Rollen lose auf. Die Bewegung der Werkstückträger erfolgt durch auftretende Reibungskräfte zwischen den Rollen, Gurten oder Platten und Reibflächen der Werkstückträger. Friktionsförderer haben insbesondere den Vorteil, dass ein Stauen der Werkstückträger möglich ist. Hierbei erfolgt während des Stauvorgangs beispielsweise bei Rollenförderern ein Durchrutschen der entsprechenden Antriebseinrichtungen der Friktionsrollen, die hierzu mit Rutschkupplungen versehen sind. Ein aufwändiges und kompliziertes Ausklinken aus einer Fördereinrichtung, wie einer Kette, ist bei Friktionsförderern nicht erforderlich.

Ferner haben Friktionsförderer den Vorteil, dass Kurven und insbesondere Abzweigungen auf einfache Weise realisiert werden können. Mit Hilfe von Abzweigungseinrichtungen, wie Weichen, können einzelne Werkstückträger beispielsweise aus- oder eingeschleust werden. Hierdurch weisen Friktionsförderer eine hohe Flexibilität auf. Ein derartiger Friktionsförderer ist in DE 40 36 214 beschrieben.

Da die Werkstückträger bei Friktionsförderern durch einen Stauvorgang an den einzelnen Arbeitsplätzen angehalten werden müssen, müssen die angetriebenen Rollen bzw. Förderelemente mit Rutschkupplungen versehen sein. Derartige Rutschkupplungen sind teuer und wartungsintensiv. Ferner ist es erforderlich, Rutschkupplungen zu justieren bzw. einzustellen, um festzulegen, ab welchem Drehmoment die Rutschkupplung durchrutscht. Aufgrund von Verschleiß muss die Einstellung in regelmäßigen Abständen überprüft werden.

Zum Anhalten der Werkstückträger an Bearbeitungsstationen, vor Weichen oder dergleichen, ist das Vorsehen von Stoppeinrichtungen bekannt. Diese weisen beispielsweise ein stabförmiges, vertikal ausgerichtetes Element auf, das über die Oberfläche des Friktionsförderers vorsteht. Der Werkstückträger fährt somit gegen die Stoppeinrichtung und wird so in der entsprechenden Position gehalten. Zur Freigabe des Werkstückträgers wird die Stoppeinrichtung aus der Bewegungsbahn des Werkstückträgers entfernt. Dies erfolgt insbesondere bei stabförmigen Stoppeinrichtungen durch vertikales Bewegen der Stoppeinrichtung nach unten.

Aus DE 195 39 844 C2 ist ferner ein Friktionsfördersystem gemäß dem Oberbegriff des Anspruchs 1 bekannt, bei dem zur Beschleunigung von Werkstückträgern einzelne angetriebene Förderelemente, wie Rollen, scheibenförmige Übertragungselemente aufweisen. Die scheibenförmigen Übertragungselemente, die eine Verzahnung aufweisen können, greifen in einen in Längsrichtung des Werkstückträgers verlaufenden Schlitz ein, wobei der Schlitz beispielsweise eine Zahnstange aufweist. Durch derartige zusätzliche Übertragungselemente kann der Werkstückträger beschleunigt werden.

Friktionsförderer, die scheibenförmige Übertragungselemente aufweisen, die in an einer Unterseite des Werkstückträgers vorgesehene, schlitzförmige Ausnehmungen eingreifen, weisen in Verbindung mit einem bewegbar im Werkstückträger integrierten Friktionselement, wie es in der nachveröffentlichten DE 10 2007 040 908 beschrieben ist, den Vorteil auf, dass es möglich ist, beim Anhalten des Werkstückträgers an einer Bearbeitungsstation oder in einer Stausituation ein Trennen der scheibenförmigen Übertragungselemente von dem Übertragungsbereich, wie dem in dem Schlitz des Werkstückträgers vorgesehenen Friktionsbereich, zu ermöglichen. Dies ist durch Anheben von zwei zur Übertragung von Reibkräften innerhalb des Werkstückträgers angeordneten Bewegungselementen möglich.

Im Bereich von Kurven oder Abzweigungen ist es jedoch nicht möglich, den Werkstückträger durch derartige scheibenförmige Übertragungselemente, die in schlitzförmige Ausnehmungen an der Unterseite des Werkstückträgers eingreifen, zu bewegen, da der Werkstückträger an einer Kurve oder Abzweigung quer zu seiner Förderrichtung bewegt werden muss. Hierbei rutscht der Werkstückträger über die Rollen, auf denen die Unterseite des Werkstückträgers aufliegt. Ein derartiges, in Abzweigung oder Kurven erforderliches seitliches Verschieben des Werkstückträgers auf den Rollen ist beim Vorsehen von scheibenförmigen Übertragungselementen, die in schlitzförmige Ausnehmungen an der Unterseite des Werkstückträgers eingreifen, nicht möglich.

Aufgabe der Erfindung ist es, ein Fördersystem, insbesondere einen Rollenförderer, zu schaffen, mit dem auf einfache Weise Abzweigungen realisiert werden können. Hierbei soll vorzugsweise zusätzlich eine einfache Stausituation ermöglicht werden.

Die Lösung der Aufgabe erfolgt erfindungsgemäß durch ein Fördersystem mit den Merkmalen des Anspruchs 1.

Das erfindungsgemäße Fördersystem, bei dem es sich insbesondere um einen Rollenförderer handelt, bei dem die Werkstückträger zumindest teilweise, vorzugsweise mittels Reibkräften, bewegt werden, weist frei drehbare Stützrollen auf. Auf den Stützrollen liegt die Unterseite der Werkstückträger auf. Die Stützrollen nehmen somit die Last des auf dem Werkstückträger aufliegenden Werkstücks auf. Da die Stützrollen frei drehbar sind, erfolgt über diese kein Antreiben bzw. Bewegen des Werkstückträgers. Vielmehr können die Stützrollen einfach ausgebildet und über Kugel- oder Gleitlager frei drehbar in einem Rahmen eines Fördersystems gehalten sein. Ferner weist das Fördersystem vorzugsweise scheibenförmig ausgebildete Übertragungselemente auf, die in an der Unterseite des Werkstückträgers vorgesehene, schlitzförmige Ausnehmungen eingreifen. Über die Antriebselemente erfolgt somit eine Kraftübertragung innerhalb der schlitzförmigen Ausnehmung an der Unterseite des Werkstückträgers auf diesen. Hierbei kann die Kraftübertragung beispielsweise dadurch erfolgen, dass in dem Schlitz eine Verzahnung, wie eine Zahnstange, vorgesehen ist, die mit einer Kette zusammenwirkt, so dass die Kraftübertragung durch Formschluss erfolgt. Vorzugsweise sind die Antriebselemente jedoch als scheibenförmige Übertragungselemente ausgebildet. Hierbei kann es sich um Scheiben mit einer am Umfang angeordneten Verzahnung handeln, die ebenfalls in die in der schlitzförmigen Ausnehmung angeordneten Zahnstangen eingreifen. Besonders bevorzugt ist es jedoch, dass die Kraftübertragung nicht durch Formschluss sondern durch Reibschluss erfolgt. An einer Innenseite der schlitzförmigen Ausnehmung ist somit zur Kraftübertragung eine Reibfläche vorgesehen, an der die Umfangsfläche der scheibenförmigen Übertragungselemente zur Kraftübertragung anliegt.

Das erfindungsgemäße Fördersystem weist in einem Abzweigungsbereich angetriebene Förderrollen auf. Die Förderrollen sind derart ausgebildet, dass die Unterseite des Werkstückträgers auf der Außenseite der Förderrollen anliegt. Die angetriebenen Förderrollen bewegen den Werkstückträger aufgrund von Reibungskräften, die von den Förderrollen auf die Unterseite des Werkstückträgers übertragen werden. Im Bereich von Kurven und/ oder Abzweigungen sind somit erfindungsgemäß keine Antriebselemente vorgesehen, die in die mindestens eine schlitzförmige Ausnehmung des Werkstückträgers eingreifen. Vielmehr erfolgt die Kraftübertragung in einer anderen Ebene, an der Unterseite des Werkstückträgers. Hierdurch ist es möglich, den Werkstückträger auf den Förderrollen seitlich zu verschieben. Der Werkstückträger kann somit aus seiner Bewegungsrichtung durch seitliches Verschieben auf den Förderrollen herausgelenkt werden.

In den Abzweigungsbereichen des erfindungsgemäßen Fördersystems sind vorzugsweise ausschließlich Förderrollen und Stützrollen vorgesehen. In besonders bevorzugter Ausführungsform sind die Abmessungen und Ausgestaltung der Stützrollen sowie der Förderrollen identisch. Die Förderrollen weisen somit zu den Stützrollen lediglich den Unterschied auf, dass es sich um angetriebene Rollen handelt. In bevorzugter Ausführungsform ist es möglich, dass die Förderrollen keine Rutschkupplungen aufweisen sondern insbesondere ununterbrochen angetrieben sind. Dies ist dadurch möglich, dass durch Vorsehen entsprechender Sensoren sichergestellt wird, dass sich in dem Abzweigungsbereich stets nur ein Werkstückträger befindet und am Auslauf des Abzweigungsbereichs, d.h. am Übergang in die gerade Förderstrecke, ausreichend Platz für einen Werkstückträger vorhanden ist. Hierdurch ist gewährleistet, dass ein Stauen von Werkstückträgern im Abzweigungsbereich nicht erfolgt. Insbesondere ist hierzu in Förderrichtung vor einem Abzweigungsbereich eine Stoppeinrichtung vorgesehen, die, sofern sich ein Werkstückträger im Abzweigungsbereich befindet, einen nachfolgenden Werkstückträger vor dem Abzweigungsbereich anhält.

Erfindungsgemäß weist das Fördersystem eine erste Kontaktebene auf, die durch die Stützrollen und Förderrollen gebildet ist. An dieser ersten Kontaktebene liegt die Unterseite des Werkstückträgers an. Eine zweite Kontaktebene ist durch die vorzugsweise horizontal ausgebildete Innenseite der mindestens einen in dem Werkstückträger vorgesehenen, schlitzförmigen Ausnehmung gebildet. Über die zweite Kontaktebene erfolgt das Übertragen von Förderkräften auf den Werkstückträger über die vorzugsweise scheibenförmig ausgebildeten Übertragungselemente. Die zweite Kontaktebene weist somit einen horizontalen Abstand zur ersten Kontaktebene auf und ist insbesondere höher als die erste Kontaktebene angeordnet. Um einen Durchbruch nicht zu verschließen, ragen die Wellen der Antriebselemente beispielsweise seitlich nur bis zu den Übertragungselementen.

Zur Realisierung von Abzweigungen zur Verbindung zweier insbesondere senkrecht aufeinander stehender Förderbahnen ist in einer der Förderbahnen ein Ablenkelement vorgesehen um den Werkstückträger, beispielsweise um 90°, auf die andere Förderbahn abzulenken. Das Ablenkelement ist vorzugsweise verschieb- und/ oder verschwenkbar, so dass es in die erste Förderbahn eingeschoben oder eingeschwenkt werden kann. Die Innenseite des Ablenkelements, gegen die der Werkstückträger stößt, ist hierbei insbesondere konkav ausgebildet. Bei einem Ablenkwinkel von 90° ist die Innenseite des Ablenkelements vorzugsweise als Viertelkreis ausgebildet.

Zum Anhalten des Werkstückträgers vor einem Abzweigungsbereich oder an einer Bearbeitungsstation weist das Fördersystem vorzugsweise eine Stoppeinrichtung auf. Die beispielsweise als Stift oder Pin ausgebildete Stoppeinrichtung ist vorzugsweise in den Förderweg des Werkstückträgers bewegbar. Dies erfolgt durch Verschwenken oder Verschieben der Stoppeinrichtung, wobei vorzugsweise ein vertikales Verschieben der Stoppeinrichtung erfolgt, so dass zum Aktivieren der Stoppeinrichtung diese nach oben in den Förderweg verschoben wird. Ein Werkstückträger fährt somit gegen die Stoppeinrichtung und wird beispielsweise vor einem Abzweigungsbereich angehalten. Vorzugsweise ist der Werkstückträger und/ oder die Stoppeinrichtung derart ausgebildet, dass bei einem Anhalten des Werkstückträgers durch eine Stoppeinrichtung ein Entkoppeln des mindestens einen, vorzugsweise scheibenförmig ausgebildeten Übertragungselements von dem Werkstückträger erfolgt. Insbesondere wird hierzu ein Friktionselement, das mit dem Werkstückträger verbunden ist, verschoben, so dass das Antriebselement zur Übertragung von Antriebskräften nicht mehr an dem Friktionselement anliegt.

Derartige Stoppeinrichtungen sind vorzugsweise ausschließlich zwischen benachbarten Stützrollen und/ oder Antriebselementen angeordnet. Die Stoppeinrichtungen sind somit vorzugsweise ausschließlich in insbesondere geraden Bereichen des Fördersystems und nicht in Bereichen von Kurven oder Abzweigungen vorgesehen. Dies hat den Vorteil, dass in Kurven und/ oder Abzweigungsbereichen insbesondere ununterbrochen angetriebene Förderrollen vorgesehen sein können, da in diesen Bereichen keine Werkstückträger angehalten oder gestaut werden. Hierzu ist vorzugsweise eine entsprechende Überwachung dieser Bereiche und insbesondere eines Auslaufsbereichs von Kurven oder Abzweigungen mittels geeigneter Sensoren bevorzugt.

Erfindungsgemäß ist der Friktionsbereich, an dem das Übertragungselement anliegt bzw. eingreift, vorzugsweise an einem mit dem Werkstückträger verbundenen Friktionselement angeordnet. Das Friktionselement ist vorzugsweise beweglich mit dem Werkstückträger verbunden. Das Friktionselement ist ferner vorzugsweise mit einem Betätigungselement verbunden. Mit Hilfe des Betätigungselements ist ein Bewegen des Friktionselements möglich. Durch die Bewegung des Friktionselements kann ein Abstand zwischen dem Übertragungselement und dem Friktionselement hergestellt werden und/ oder die Reibung zwischen diesen beiden Elementen durch Verringerung des Anlagedrucks reduziert werden. Mit Hilfe des Betätigungselements erfolgt somit ein Bewegen des Friktionselements, so dass sich der Abstand zwischen Friktionselement und Übertragungselement vergrößert, vorzugsweise sich zwischen diesen beiden Elementen ein Schlitz ausbildet. Durch Betätigen des Betätigungselements erfolgt somit ein Außer-Eingriff-Bringen des Übertragungselements und des Friktionselements, wobei erfindungsgemäß unter Außer-Eingriff-Bringen auch ein Verringern der Reibung zwischen diesen beiden Elementen verstanden wird.

Das Betätigungselement kann durch ein Stoppelement im Bereich einer Arbeitsstation oder durch Stauen der Werkstückträger aktiviert werden. Ein Anhalten des Werkstückträgers führt somit stets dazu, dass das Übertragungselement und das Friktionselement außer Eingriff gebracht werden. Dies hat den erfindungsgemäßen Vorteil, dass Förderelemente ohne Rutschkupplungen vorgesehen werden können, da die angetriebenen Förderelemente frei drehen können, sobald das Friktionselement und das Übertragungselement außer Eingriff gebracht sind. Zumindest können erheblich einfacher aufgebaute Rutschkupplungen vorgesehen werden, die sodann im Wesentlichen als zusätzliches Sicherheitselement dienen.

Das erfindungsgemäße Friktionsfördersystem ist insbesondere für den Transport von Werkstücken mit einem Gewicht von weniger als 250 kg geeignet. Bei derartigen Friktionsfördersystemen liegt vorzugsweise der Werkstückträger unmittelbar auf den Förderelementen ohne Vorsehen zusätzlicher Abstützelemente, wie an dem Werkstückträger vorgesehene Abstützrollen, auf.

Vorzugsweise sind die Friktionselemente in einer Ausnehmung des Werkstückträgers bzw. des Grundkörpers des Werkstückträgers angeordnet. Die Ausnehmung ist insbesondere schlitzförmig ausgebildet. In bevorzugter Ausführungsform sind je Werkstückträger mindestens zwei, insbesondere schlitzförmige Ausnehmungen vorgesehen. Die Ausnehmungen erstrecken sich vorzugsweise über die gesamte Länge des Werkstückträgers in dessen Längsrichtung bzw. in Förderrichtung. Die beiden Ausnehmungen sind vorzugsweise parallel zueinander angeordnet. Jede Ausnehmung ist vorzugsweise an den Enden offen, so dass ein beispielsweise scheibenförmiges Übertragungselement einfach in die Ausnehmung eingeführt werden kann.

Das Friktionselement, das vorzugsweise innerhalb der Ausnehmung angeordnet ist, ist in bevorzugter Ausführungsform stabförmig ausgebildet. Insbesondere handelt es sich hierbei um einen Stab mit rechteckigem Querschnitt, wobei die in Richtung des Übertragungselements der Förderelemente weisende Seite eine erhöhte Rauhigkeit aufweisen kann. Das Friktionselement erstreckt sich vorzugsweise im Wesentlichen über die gesamte Länge des Werkstückträgers. Zumindest erstreckt sich das Friktionselement über dreiviertel der Länge des Werkstückträgers. Hierdurch kann der Abstand der angetriebenen Förderelemente entsprechend vergrößert werden.

Bei dem Betätigungselement kann es sich um ein beispielsweise elektrisch und/ oder magnetisch angetriebenes Betätigungselement handeln. Beispielsweise kann das Betätigungselement einen Sensor aufweisen, durch den eine Stau- oder Stoppsituation detektiert wird. Sobald die Stau- oder Stoppsituation detektiert ist, erfolgt sodann mit Hilfe des Betätigungselements ein Bewegen des Friktionselements.

In besonders bevorzugter Ausführungsform der Erfindung ist das Betätigungselement mechanisch ausgebildet. Insbesondere ist das Betätigungselement fest mit dem mindestens einen Friktionselement, insbesondere den beiden je Werkstückträger vorgesehenen Friktionselementen verbunden. Hierbei kann das Betätigungselement beispielsweise entsprechend einer Stoßstange über das vordere Ende des Werkstückträgers hinausragen, wobei ein derartiges Bestätigungselement insbesondere ein Betätigen des Friktionselemente bei einer Stausituation bewirkt. Vorzugsweise ist ein weiteres Betätigungselement vorgesehen, das durch eine Stoppeinrichtung betätigt wird. Ein derartiges Betätigungselement, das vorzugsweise unmittelbar oder mittelbar über ein Zwischenelement mit dem oder den Friktionselementen verbunden ist, ist insbesondere an einer Unterseite des Werkstückträgers angeordnet. Insbesondere ist ein derartiges Betätigungselement in einer an der Unterseite des Werkstückträgers vorgesehen Schlitz angeordnet, wobei bei einer Stoppsituation insbesondere ein Pin der Stoppeinrichtung in den Schlitz eingeführt wird und der Werkstückträger gegen den im Schlitz geführten Stopper stößt. Eine derartige Betätigungseinrichtung ist somit insbesondere im Bereich des Anfahrelements, wie der Querseite des Schlitzes, gegen den der Stift bzw. Pin der Stoppeinrichtung anfährt, angeordnet. In der Halteposition des Werkstückträgers, in der das Halteelement mit der Stoppeinrichtung zusammenwirkt um ein Zurückstoßen oder Zurückschieben des Werkstückträgers zu vermeiden, wird somit gleichzeitig vorzugsweise auch ein derartiges Betätigungselement betätigt. Hierbei erfolgt die Trennung der Friktionselemente von den Förderelementen zeitgleich mit dem Zusammenwirken des Halteelements mit der Stoppeinrichtung in der Halteposition.

Es ist somit möglich, zwei gesonderte Bestätigungselemente vorzusehen, wobei eines zum Anheben des Friktionselements bei einer Stausituation und das andere bei einer Stoppsituation dient. Hierbei sind die beiden Betätigungselemente vorzugsweise fest mit dem mindestens einem Friktionselement verbunden. Ggf. kann es sich auch um zwei gesonderte Betätigungselemente handeln. Je nach Lage und Ausgestaltung des durch ein Stoppeinrichtung betätigten Betätigungselements ist es auch möglich nur ein einziges Betätigungselement vorzusehen, das sowohl in einer Stausituation als auch in einer Stoppsituation betätigt wird.

Beim Anfahren eines Werkstückträgers gegen einen Stopper oder beim Auffahren eines Werkstückträgers auf einen vor dem Werkstückträger befindlichen anderen Werkstückträger oder auf ein Hindernis erfolgt somit ein Verschieben des Betätigungselements in Richtung des Werkstückträgers. Aufgrund der vorzugsweise festen mechanischen Verbindung des Betätigungselements mit dem mindestens einen Friktionselement wird durch die hervorgerufene Bewegung des Betätigungselements automatisch auch eine Bewegung des mindestens einen Friktionselements, vorzugsweise beider Friktionselemente hervorgerufen. Durch diese Bewegung gelangt das Friktionselement in die Außer-Eingriff-Position, so dass die Reibung zwischen dem an dem Friktionselement vorgesehenen Friktionsbereich und dem Übertragungselement zumindest verringert wird, vorzugsweise die beiden Elemente in einem Abstand zueinander gebracht werden.

Bei dem erfindungsgemäßen Friktionsfördersystem dienen die angetriebenen scheibenförmigen Übertragungselemente im Wesentlichen zum Antreiben bzw. Fördern der Werkstückträger. Eine Aufnahme des Gewichts des Werkstückträgers und des Werkstücks erfolgt im Wesentlichen durch die nicht angetriebenen Stützrollen oder in Kurven- und/ oder Abzweigungsbereichen durch die angetriebenen Förderrollen.

Die angetriebenen Förderelemente, d.h. die insbesondere scheibenförmigen Übertragungselemente sowie die Förderrollen, sind vorzugsweise über Elektromotoren angetrieben. Hierbei ist es möglich, mehrere derartige Förderelemente über einen gemeinsamen Elektromotor in Verbindung mit einem Getriebe oder einer Kette gemeinsam anzutreiben. Dies ist insbesondere bei zueinander benachbart angeordneten Förderrollen, wie sie im Bereich von Kurven und/ oder Abzweigungen vorgesehen sind, vorteilhaft.

Nachfolgend wird die Erfindung anhand einer bevorzugten Ausführungsform unter Bezugnahme auf die anliegenden Zeichnungen näher erläutert.

### Es zeigen:

- Fig. 1: eine schematische Draufsicht eines Friktionsförderers mit Werkstückträger,
- Fig. 2: eine schematische Schnittansicht entlang der Linie II-II in Fig. 1, wobei die Übertragungselemente mit den Friktionselementen in Eingriff stehen,
- Fig. 3: eine der Fig. 2 entsprechende, schematische Ansicht, wobei jedoch die Friktionselemente hinsichtlich der Übertragungselemente sich in der Außer-Eingriff-Position befinden,
- Fig. 4: eine schematische Schnittansicht entlang der Linie IV-IV in Fig. 1, wobei sich einen Stoppeinrichtung in der Halteposition befindet,
- Fig. 5: eine schematische Schnittansicht entlang der Linie V-V in Fig. 4, und
- Fig. 6: eine schematische Draufsicht eines Abzweigungsbereichs eines Friktionsförderers.

Das Friktionsfördersystem weist eine Fördereinrichtung 10 auf. Die Fördereinrichtung 10 weist in Längs- bzw. Förderrichtung 12 verlaufende Rahmen 14 auf. Zusätzlich kann das Fördersystem nicht dargestellte Weichen und Kurven aufweisen. Die Rahmen 14 tragen im dargestellten Ausführungsbeispiel frei drehbare Stützrollen 16 sowie Förderrollen 18. Die Stützrollen 16 sind über Achsen 20 und entsprechende Lager frei drehbar in den Rahmen 14 gelagert. Im dargestellten Ausführungsbeispiel erstrecken sich auch die angetriebenen Förderelemente (Förderrollen 18) über die gesamte Breite der Fördereinrichtung 10, so dass eine Seite der angetriebenen Förderrollen 18 über eine Welle 20 frei drehbar in dem Rahmen 14 gelagert ist. Die zweite Welle 22 der angetriebenen Fördereinrichtung 18 ist angetrieben und mit einem Elektromotor 24 verbunden.

Im dargestellten Ausführungsbeispiel erstrecken sich die nicht angetriebenen Stützrollen 16 sowie die angetriebenen Förderelemente 18 über die gesamte Breite der Fördereinrichtung 10. Ebenso können einzelne Förderelemente mit den beiden einander gegenüberliegenden Rahmen 14 verbunden sein, so dass zwischen den Förderelementen ein Freiraum bzw. Durchbruch entsteht. Hierdurch sind die Werkstücke auch von unten zugänglich, sofern auch der Werkstückträger einen entsprechenden Durchbruch aufweist.

Die angetriebenen Förderrollen 18 weisen im dargestellten Ausführungsbeispiel zwei scheibenförmige Übertragungselemente 26 auf. Die beiden scheibenförmigen Übertragungselemente 26 sind in einem Abstand zueinander angeordnet und im dargestellten Ausführungsbeispiel von einer zylindrischen Rolle 28 getragen. Die zylindrische Rolle 28 weist einen geringeren Außendurchmesser als die ebenfalls zylindrisch ausgebildete nicht angetriebenen Stützrollen 16 auf.

Ein Werkstückträger 30 liegt auf der Oberseite der Fördereinrichtung 10 auf und wird mit Hilfe der angetriebenen Förderrollen 18 in Richtung des Pfeils 12 bewegt.

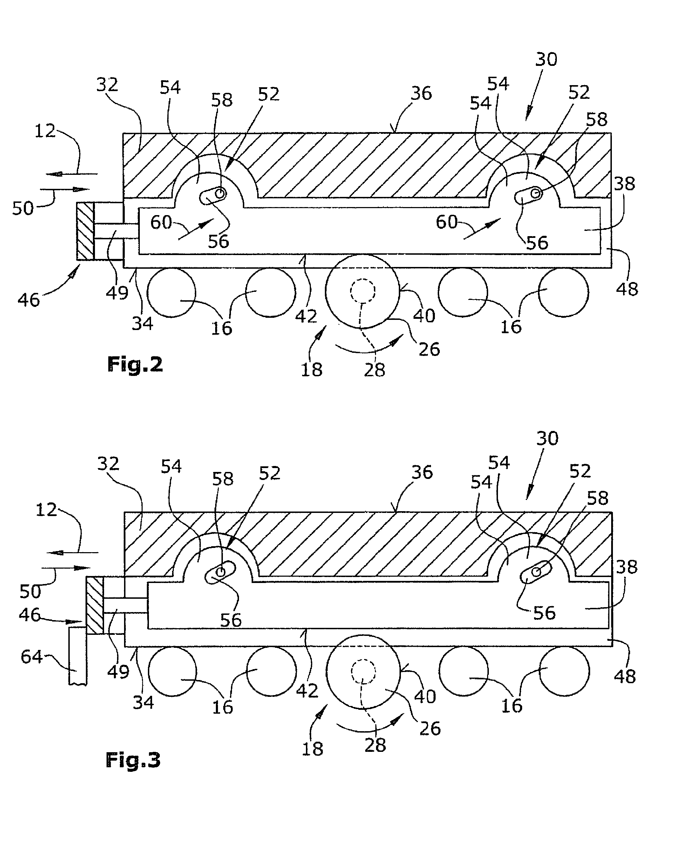

Der Werkstückträger 30 weist einen Grundkörper 32 auf. Dessen Unterseite 34 (Fig. 2) liegt auf den nicht angetriebenen, frei drehbaren Stützrollen 16 auf.

Die Stützrollen 16 dienen somit im Wesentlichen zur Aufnahme des auf einer Oberseite 36 des Werkstückträgers 30 angeordneten Werkstücks.

Zum Bewegen des Werkstückträgers 30 in Förderrichtung 12 liegen während des Bewegens (Fig. 2) Friktionselemente 38 an den Übertragungselementen 26 an. Hierzu weisen die scheibenförmigen Übertragungselemente 26 eine zylindermantelförmige Oberfläche 40 auf, die an einem insbesondere ebenen Friktionsbereich 42 des Friktionselements 38 anliegt. Hierbei weist das Friktionselement vorzugsweise einen rechteckigen Querschnitt auf, so dass der Friktionsbereich 42 eine ebene, sich über die gesamte Länge des Friktionselements 38 erstreckende Fläche darstellt. Durch Drehen der angetriebenen Förderrollen 18 in Richtung eines Pfeils 44 erfolgt somit ein Transport des Werkstückträgers 30 in Richtung des Pfeils 12 (Fig. 2).

Um den Werkstückträger beispielsweise an einer Bearbeitungsposition oder beim Stauen mehrerer Werkstückträger anzuhalten, sind die im dargestellten Ausführungsbeispiel 2 sich über die gesamte Länge des Werkstückträgers 30 erstreckenden Friktionselemente 38 mit einem Betätigungselement 46 verbunden. Das Betätigungselement 46, das entsprechend einer Stoßstange ausgebildet ist, ist über insbesondere stabförmige Verbindungselemente 49 starr mit den beiden Friktionselementen 38 verbunden.

Die jeweils in einer schlitzförmigen Ausnehmung 48 des Werkstückträgers 30 angeordneten Friktionselemente 38 werden somit zwangsweise in dem Schlitz 48 bewegt, wenn das Betätigungselement in Richtung eines Pfeils 50 gedrückt wird. Dies erfolgt durch Anfahren gegen ein Stoppelement oder durch Auffahren auf einen in Förderrichtung vor dem Werkstückträger 30 angeordneten weiteren Werkstückträger. Aufgrund der mechanischen Verbindung zwischen dem Betätigungselement 46 und den beiden Friktionselementen 38 ist kein Sensor oder elektrischer Antrieb zum Verschieben der Friktionselemente in die Außer-Eingriff-Position erforderlich.

Vielmehr erfolgt durch Verschieben des Betätigungselements 46 in Richtung des Pfeils 50 ebenfalls ein Verschieben der Friktionselemente 38.

Um ein Verschieben der Friktionselemente 38 in die Außer-Eingriff-Position zu gewährleisten, sind ferner zwei Bewegungselemente 52 vorgesehen, die im dargestellten Ausführungsbeispiel fest mit den Friktionselementen 38 verbunden sind. Hierbei sind je Friktionselement 38 zwei Bewegungselemente 52 vorgesehen. Bei den Bewegungselementen 52 handelt es sich im dargestellten Ausführungsbeispiel um mit dem stabförmigen Friktionselement verbundene laschenförmige Ansätze 54, die jeweils ein Langloch 56 aufweisen. Das Langloch 56 verläuft in einem Winkel bzw. schräg zur Förderrichtung 12, wobei das Langloch in Förderrichtung 12 fallend ausgebildet ist. In den beiden als Langlöchern ausgebildeten Öffnungen 56 ist jeweils ein im dargestellten Ausführungsbeispiel als zylindrischer Stift ausgebildeter Ansatz 58 angeordnet. Der Stift 58 ist fest mit dem Grundkörper 32 des Werkstückträgers 30 verbunden.

Durch Bewegen des Betätigungselements 46 in Richtung des Pfeils 50 erfolgt somit ein Bewegen der Friktionselemente 38 in Richtung der Pfeile 60, d.h. parallel zur Ausrichtung der Langlöcher 56. Hierdurch werden die Friktionselemente 38 bzgl. der Übertragungselemente 26 in die Außer-Eingriff-Position gebracht.

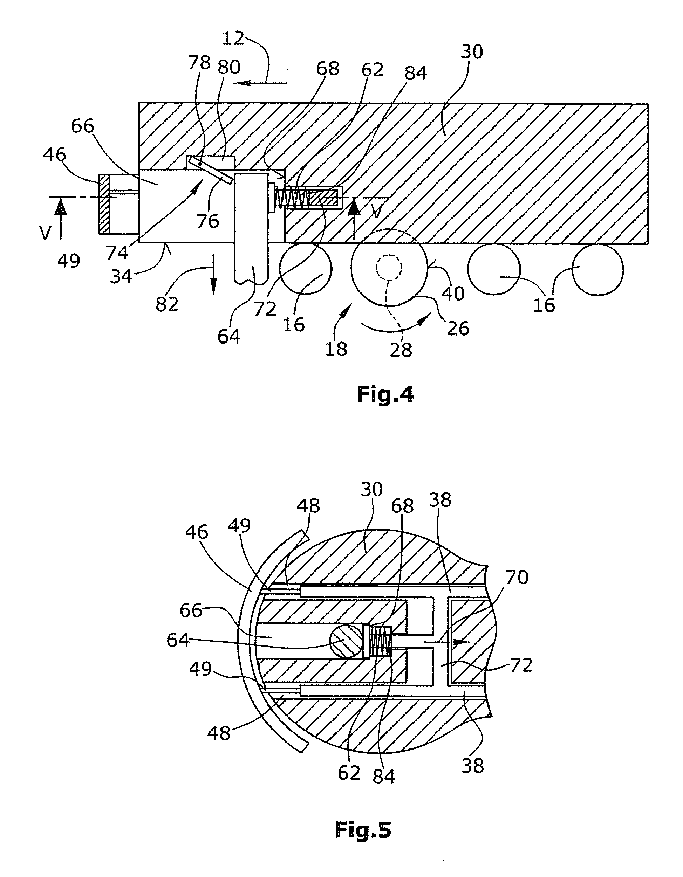

Ein Verschieben der Friktionselemente 38 kann in der dargestellten besonders bevorzugten Ausführungsform der Erfindung nicht nur durch Bewegen des Betätigungselements 46, sondern auch durch Verschieben des Betätigungselements 62 (Fign. 4 und 5) hervorgerufen werden. Bei dem Betätigungselement 62 handelt es sich um ein durch eine Stoppeinrichtung betätigbares Element, wobei schematisch ein der Pin 64 der Stoppeinrichtung dargestellt ist. Beim Auffahren des Werkstückträgers auf eine Stoppeinrichtung 64 gelangt diese zunächst in einen in der Unterseite 34 des Werkstückträgers 30 angeordneten Schlitz 66. Der Werkstückträger 30 bewegt sich so lange in Bewegungsrichtung 12 bis der Stift bzw. Pin 64 an einer als Anfahrelement bzw. Anschlagelement dienenden Rückwand, bzw. Rückseite 68 des Schlitzes anstößt. Hierdurch wird das im dargestellten Ausführungsbeispiel zum Beispiel stiftförmige innerhalb des Werkstückträgers 30 angeordnete Betätigungselement 62 bezogen auf den Werkstückträger 30 nach hinten, das heißt in Richtung eines Pfeils 70 verschoben. Das Betätigungselement 62 ist über einen Quersteg 72 (Fig. 5) mit den beiden Friktionselementen 38 oder den Verbindungselementen 49 (Fign. 2 und 3) verbunden.

Somit wird sowohl beim Anfahren des Werkstückträgers 30 in einer Stausituation ein Verschieben der Friktionselemente 38 nach oben, über das stoßstangenartige Betätigungselement 46 als auch beim Anfahren gegen eine Stoppeinrichtung 64 über das stiftförmige Betätigungselement 62 bewirkt.

Insbesondere bei der dargestellten bevorzugten Ausführungsform der Erfindung bei der in Stau- und Stoppsituationen ein Trennen der Friktionselemente 38 von dem Übertragungselementen 26 erfolgt, besteht die Gefahr, dass der Werkstückträger entgegen der Transportrichtung 12 beim Anfahren gegen eine Stoppeinrichtung 64 zurückprallt und somit insbesondere an Bearbeitungsstationen keine definierte Lage des Werkstücks gewährleistet ist. Erfindungsgemäß ist daher ein mit der Stoppeinrichtung 64 zusammenwirkendes Halteelement 74 (Fig. 4) vorgesehen. Im dargestellten Ausführungsbeispiel weist das Halteelement 74 ein Plättchen 76 auf, das insbesondere aus Metall hergestellt ist. Das Plättchen 76 ist um eine bezogen auf den Schwerpunkt des Plättchens 76 exzentrisch angeordnete Achse 78 schwenkbar. Aufgrund des Gewichts des Plättchens 76 befindet sich dieses unabhängig davon, ob eine Stoppeinrichtung 64 in dem Schlitz 66 befindet, in der in Fig. 4 dargestellten Position.

Bei Auffahren auf eine Stoppeinrichtung 64 wird das Plättchen 76 von der Stoppeinrichtung 64 nach oben in eine Ausnehmung 80 um die Achse 78 verschwenkt. Sobald das Halteelement 74 beim Auffahren auf eine Stoppeinrichtung 64 die Stoppeinrichtung passiert hat, wie in Fig. 4 dargestellt, fällt das Plättchen 76 aufgrund der Gewichtskraft wieder in die in Fig. 4 dargestellte Stellung. In dieser Position erfüllt das Halteelement 74 seine Haltefunktion, da bei einem Zurückprallen des Werkstückträgers 30 ein Bewegen des Werkstückträgers in Fig. 4 nach rechts nicht mehr möglich ist.

Ein Weiterfördern des Werkstückträgers 30 erfolgt durch Betätigen der Stoppeinrichtung, wobei der dargestellte Pin 64 der Stoppeinrichtung nach unten in Richtung eines Pfeils 82 verschoben wird, bis er sich vollständig unterhalb der Unterseite 34 des Werkstückträgers 30 befindet. In dieser Position ist ein Überfahren des Stiftes 64 möglich. Durch das Zurückziehen des Stiftes 64 gelangen die Friktionselemente 38 wieder in Eingriff mit den Stützrollen 16. Dies kann aufgrund der Gewichtskraft der Friktionselemente 38 erfolgen, wobei die Bewegung der Friktionselemente 38 durch eine Feder 84 unterstützt werden kann.

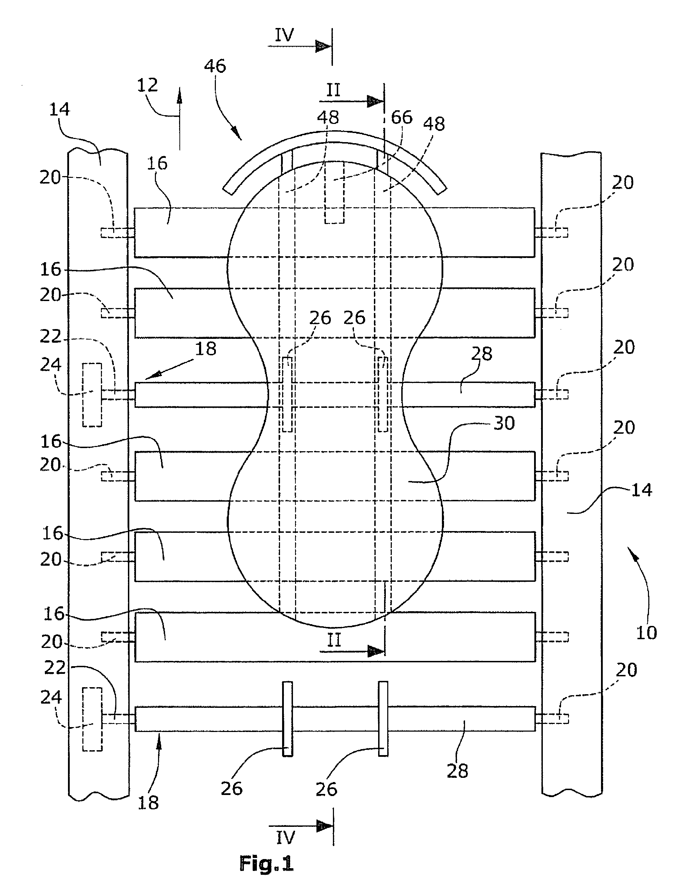

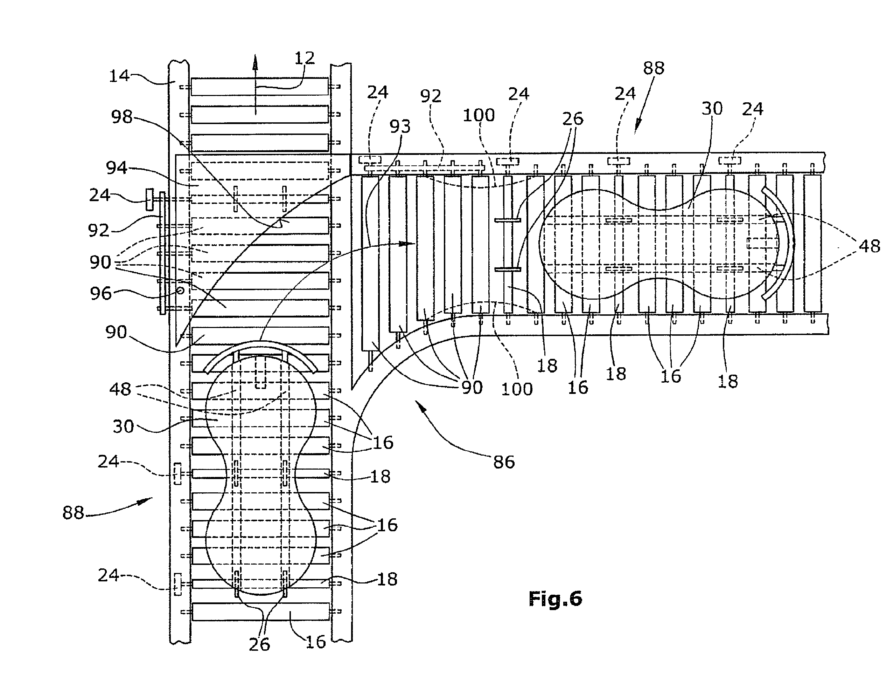

Aus der in Fig. 6 dargestellten Draufsicht des Fördersystems ist ein Abzweigungsbereich 86 ersichtlich. Durch den Abzweigungsbereich 86 sind zwei geradlinige Förderbereiche 88, die dem anhand Fig. 1 beschriebenen Förderbereich entsprechen, miteinander verbunden. Hierzu sind im Abzweigungsbereich 86 angetriebene Förderrollen 90 vorgesehen. Die Förderrollen 90 sind über einen Elektromotor 24 und einen Ketten- oder Riementrieb 92 angetrieben. Die Förderrollen 90 weisen einen Außendurchmesser auf, der im Wesentlichen dem Außendurchmesser der Stützrollen 16 entspricht. Da innerhalb des Abzweigungsbereichs 86, in dem ausschließlich Förderrollen 90 und keine Stoppeinrichtungen angeordnet sind, Werkstückträger nicht gestoppt oder gestaut werden, können die Förderrollen 90 ununterbrochen angetrieben werden und müssen keine Rutschkupplungen aufweisen.

Zum Ablenken des Werkstückträgers 30 in Fig. 2 nach rechts, wie durch den Pfeil 93 dargestellt, ist ein Ablenkelement 94 in die Förderrichtung 12 des in Fig. 6 linken Werkstückträgers 30 geschwenkt. Hierzu ist das Ablenkelement 94 um eine Achse 96 ein- bzw. ausschwenkbar. In der in Fig. 6 dargestellten Situation erfolgt somit ein Anfahren des abzulenkenden Werkstückträgers 30 gegen eine konkav ausgebildete Innenseite 98 des Ablenkelements 94. Hierdurch wird der in Fig. 6 linke Werkstückträger 30 in Richtung des Pfeils 93 nach rechts umgeschwenkt und gleitet auf den in Fig. 6 von links nach rechts verlaufenden Förderrollen 90 nach rechts. Diese seitliche Verschiebung des Werkstückträgers 30 erfolgt bis der Werkstückträger 30 von der ersten, in Fig. 6 von oben nach unten verlaufenden Rolle 90 der nach rechts führenden Förderbahn 88 erfasst wird.

Um sicherzustellen, dass die scheibenförmigen Übertragungselemente 26 wieder in die schlitzförmigen Ausnehmungen 48 eingreifen, sind im dargestellten Ausführungsbeispiel gestrichelt dargestellte Einführelemente 100 vorgesehen. Durch diese wird der Werkstückträger 30 auf der Förderbahn 88 zentriert, da die Außenseiten des Werkstückträgers 30 an den Einführelementen 100 anliegen.

Wenn der in Fig. 6 linke Werkstückträger 30 nicht abgelenkt werden soll, wird das Ablenkelement um die Achse 96 aus der Bewegungsbahn 12 ausgeschwenkt. Selbstverständlich kann auch ein Klappen des Ablenkelements um eine beispielsweise horizontal parallel zum Rahmen 14 verlaufende Achse erfolgen.

Vor dem Abzweigungsbereich 86 ist vorzugsweise eine Stoppeinrichtung 64, wie insbesondere anhand der Fig. 2 - 5 beschrieben, vorgesehen. Mit Hilfe der Stoppeinrichtung können Werkstückträger 30 vor dem Einfahren in den Abzweigungsbereich 86 angehalten werden. Durch entsprechende Überwachungssensoren kann hierbei sichergestellt werden, dass ein Werkstückträger nur dann in den Abzweigungsbereich 86 einfährt, wenn sich hierin kein Werkstückträger mehr befindet. Durch weitere Sensoren kann sichergestellt werden, dass auch im Anschluss an den Abzweigungsbereich 86 genug Raum für einen weiteren Werkstückträger 30 besteht, so dass ein Werkstückträger 30 auf den Förderrollen 90 nicht gestaut wird.

Erfindungsgemäß weist das Fördersystem somit zwei Kontaktebenen auf. Die erste Kontaktebene ist durch die Stützrollen 16 sowie die Förderrollen 90 ausgebildet. Die erste Kontaktebene ist somit diejenige Ebene, an der die Unterseite 34 (Fig. 2-4) des Werkstückträgers 30 anliegt. Auf die Unterseite 34 wird im Abzweigungsbereich 86 Reibungskraft von den Förderrollen 90 auf den Werkstückträger 30 übertragen. Die zweite Kontaktebene ist durch den Friktionsbereich 42 der Friktionselemente 38 ausgebildet. Hierbei wird über diese Ebene beim geradlinigen Fördern der Werkstückträger die entsprechende Reibungskraft durch die scheibenförmigen Übertragungselemente 26 auf die Werkstückträger 30 übertragen. Die zweite Kontaktebene, die durch den Friktionsbereich 42 gebildet ist, ist horizontal höher als die erste durch die Unterseite 34 gebildete Kontaktebene. Ferner kann die zweite Kontaktebene zum Auskoppeln der Werkstückträger, wie vorstehend beschrieben, angehoben werden.

## Patentansprüche

1. Fördersystem, insbesondere Rollenförderer, zum Bewegen von Werkstückträgern (30), insbesondere mittels Reibkräften, mit angetriebenen Übertragungselementen (26), die in schlitzförmige Ausnehmungen (48) der Werkstückträger (30) zur Kraftübertragung eingreifen, **dadurch gekennzeichnet, dass** das Fördersystem frei drehbaren Stützrollen (16) zur Auflage einer Unterseite (34) eines Werkstückträgers (30) aufweist, und wobei; in einem Abzweigungsbereich (86) vorgesehene, angetriebene Förderrollen (90), auf denen die Unterseite (34) des Werkstückträgers (30) zur Kraftübertragung durch Reibung anliegt,
wobei der Abzweigungsbereich (86) zwei geradlinige Förderbereiche (88) mit senkrecht zueinander angeordneten Förderrollen (90) verbindet.

2. Fördersystem nach Anspruch 1, **dadurch gekennzeichnet, dass** im Abzweigungsbereich (86) ausschließlich Förderrollen (90) und ggf. Stützrollen (16) vorgesehen sind.

3. Fördersystem nach Anspruch 1 oder 2, **dadurch gekennzeichnet, dass** eine durch die Stützrollen (16) und/ oder die Förderrollen (90) gebildete erste Kontaktebene (34) zu einer durch die Antriebselemente (26) gebildeten zweiten Kontaktebene (42) einen horizontalen Abstand aufweist.

4. Fördersystem nach einem der Ansprüche 1 - 3, **dadurch gekennzeichnet, dass** die Übertragungselemente (26) scheibenförmig ausgebildet sind und die Kraftübertragung vorzugsweise durch Reibung erfolgt.

5. Fördersystem nach einem der Ansprüche 1-4, **dadurch gekennzeichnet, dass** die Stützrollen (16) und die Förderrollen (90) im Wesentlichen denselben Außendurchmesser aufweisen.

6. Fördersystem nach einem der Ansprüche 1-5, **dadurch gekennzeichnet, dass** die Übertragungselemente (26) bezogen auf die Breite des Werkstückträgers (30) außermittig angeordnet sind.

7. Fördersystem nach einem der Ansprüche 1-6, **gekennzeichnet durch** ein insbesondere horizontal verschwenkbar und/oder verschiebbar ausgebildetes Ablenkelement (94) zum Ablenken eines Werkstückträgers (30) im Abzweigungsbereich (86).

8. Fördersystem nach einem der Ansprüche 1-7, **gekennzeichnet durch** eine in einen Förderweg (12) des Werkstückträgers (30) bewegbare Stoppeinrichtung (64).

9. Fördersystem nach Anspruch 8, **dadurch gekennzeichnet, dass** die Stoppeinrichtung (64) ein Entkoppeln des mindestens einen Übertragungselements (26) von dem Werkstückträger (30), insbesondere von einem mit dem Werkstückträger (30) verbundenen Friktionselement (38) bewirkt.

10. Fördersystem nach Anspruch 8 oder 9, **dadurch gekennzeichnet, dass** die Stoppeinrichtung (64) zwischen den benachbarten Stützrollen (16) und/ oder den Antriebselementen (26) vorgesehen ist.

## Claims

1. A conveyor system, in particular a roller conveyor, for moving workpiece carriers (30), especially by means of friction forces, comprising
driven transmission elements (26) engaging into slot-shaped recesses (48) of the workpiece carriers (30) in order to transmit force,
**characterized in that**
the conveyor system comprises freely rotatable supporting rollers (16) for a bottom face (34) of a workpiece carrier (30) to rest thereon,
driven conveyor rollers (90) provided in a branch (86), on which rollers the bottom face (34) of the workpiece carrier (30) rests for the transmission of force by friction,
wherein the branch (86) connects two linear conveyor sections (88) having conveyor rollers (90) arranged perpendicularly with respect to each other.

2. The conveyor system of claim 1, wherein branches (86) are exclusively provided with conveying rollers (90) and, optionally, supporting rollers (16).

3. The conveyor system of claim 1 or 2, wherein a first contact plane (34) formed by the supporting rollers (16) and/or the conveyor rollers (90) is spaced horizontally from a second contact plane (42) formed by the drive elements (26).

4. The conveyor system of one of claims 1-3, wherein the transmission elements (26) are disc-shaped and the transmission of force is preferably effected by friction.

5. The conveyor system of one of claims 1-4, wherein the supporting rollers (16) and the conveyor rollers (90) substantially have the same outer diameter.

6. The conveyor system of one of claims 1 - 5, wherein the transmission elements (26) are arranged eccentrically with respect to the width of the workpiece carriers (30).

7. The conveyor system of one of claims 1-6, **characterized by** a deflector element (94) for deflecting a workpiece carrier (30) at a branch (86), said deflector element in particular being pivotable and/or displaceable in a horizontal direction.

8. The conveyor system of one of claims 1-7, **characterized by** a stop means (64) adapted to be moved into the transport path (12) of the workpiece carrier (30).

9. The conveyor system of claim 8, wherein the stop means (64) causes a disengagement of the at least one transmission element (26) from the workpiece carrier (30), in particular from a friction element (38) connected with the workpiece carrier (30).

10. The friction conveyor of claim 8 or 9, wherein the stop means (64) is provided between adjacent supporting rollers (16) and/or the drive elements (26).

## Revendications

1. Système de convoyage, en particulier convoyeur à rouleaux, pour déplacer des palettes porte-pièces (30), en particulier au moyen de forces de friction, comprenant des éléments de transfert entraînés (26), qui s'engrènent dans des évidements en forme de fente (48) des palettes porte-pièces (30) en vue de la transmission de force, **caractérisé en ce que** le système de convoyage présente des rouleaux d'appui (16) pouvant tourner librement prévus pour la mise en place d'une face inférieure (34) d'une palette porte-pièces (30), et, dans une zone de bifurcation (86), des rouleaux de transport entraînés (90) sur lesquels repose la face inférieure (34) de la palette porte-pièces (30) en vue de la transmission de force par friction, dans lequel la zone de bifurcation (86) relie deux zones de transport (88) rectilignes présentant des rouleaux de transport (90) disposés perpendiculairement les uns par rapport aux autres.

2. Système de convoyage selon la revendication 1, **caractérisé en ce que**, dans la zone de bifurcation (86), sont prévus exclusivement des rouleaux de transport (90) et éventuellement des rouleaux d'appui (16).

3. Système de convoyage selon la revendication 1 ou 2, **caractérisé en ce qu'**un premier plan de contact (34) formé par les rouleaux d'appui (16) et/ou les rouleaux de transport (90) présente une certaine distance horizontale par rapport à un deuxième plan de contact (42) formé par les éléments d'entraînement (26).

4. Système de convoyage selon l'une quelconque des revendications 1 à 3, **caractérisé en ce que** les éléments de transfert (26) sont réalisés sous la forme de disques et que la transmission de force a lieu de préférence par friction.

5. Système de convoyage selon l'une quelconque des revendications 1 à 4, **caractérisé en ce que** les rouleaux d'appui (16) et les rouleaux de transport (90) présentent essentiellement le même diamètre extérieur.

6. Système de convoyage selon l'une quelconque des revendications 1 à 5, **caractérisé en ce que** les éléments de transfert (26) sont disposés de manière excentrée par rapport à la largeur de la palette porte-pièces (30).

7. Système de convoyage selon l'une quelconque des revendications 1 à 6, **caractérisé par** un élément de déviation (94) réalisé en particulier de manière à pouvoir être pivoté et/ou décalé horizontalement en vue de dévier une palette porte-pièces (30) dans la zone de bifurcation (86).

8. Système de convoyage selon l'une quelconque des revendications 1 à 7, **caractérisé par** un dispositif d'arrêt (64) mobile à l'intérieur d'une voie de transport (12) de la palette porte-pièces (30).

9. Système de convoyage selon la revendication 8, **caractérisé en ce que** le dispositif d'arrêt (64) entraîne un découplage du au moins un élément de transfert (26) de la palette porte-pièces (30), en particulier d'un élément à friction (38) relié à la palette porte-pièces (30).

10. Système de convoyage selon la revendication 8 ou 9, **caractérisé en ce que** le dispositif d'arrêt (64) est prévu entre les rouleaux d'appui (16) et/ou les éléments d'entraînement (26) adjacents.
